# EUROPEAN PATENT APPLICATION

(11) **EP 4 843 904 A1**
(43) Date of publication of application: **25.11.2026**
(21) Application number: 26179324.4
(22) Date of filing: 18.05.2026
(51) Int. Cl.: B65B 51/14, B29C 65/00, B29C 65/02, B65B 9/08, B65B 9/093, B65B 59/00, B65B 59/02, B65B 65/02

(54) **PACKAGING MACHINE**

(30) Priority: 20.05.2025 IT 202500011341
(71) Applicant: P.F.M. S.p.A., 36036 Torrebelvicino (Vicenza) (IT)
(72) Inventor: FIORAVANTI, Andrea, 36036 Torrebelvicino (VICENZA) (IT); FIORAVANTI, Paolo, 36036 Torrebelvicino (VICENZA) (IT)
(74) Representative: Sandri, Sandro

(57) **Abstract**

A packaging machine (101) comprises a frame (110) comprising first and second slide guides (50a, 50b); a plurality of sealing devices (100) slidably mounted on the first and second slide guides (50a, 50b). Each sealing device (100) comprises a support structure (20), and a pair of sealing bars (30a, 30b) facing each other and mounted on said support structure (20). Each sealing bar (30a, 30b) is reciprocally movable between a rest configuration, in which the sealing bars are spaced apart from each other to allow a sliding through of the flexible film; and a working configuration, in which said sealing bars (30a, 30b) are abutted so as to produce one or more sealed portions on the flexible film, in order to form an at least partially closed package. Each sealing device (100) comprises actuation elements (40) mechanically mounted on said support structure (20) and selectively activatable to move each sealing device (100) by a predefined value of shift. The actuation elements (40) allow an autonomous and/or independent movement of each sealing device (100) on which they are mounted, so as to adjust a position of each sealing device (100) during a simultaneous sliding through of the flexible packaging film.

## Description

### TECHNICAL FIELD

The present invention relates to a packaging machine.

More in detail, the packaging machine according to the invention fits into the sector of production and marketing of machines and more generally systems or plants or automatic packaging lines, in particular intended to create a plurality of packages adapted to wrap a plurality of products of various kinds around a flexible packaging film (e.g. in a polymeric material). The packaging machine according to the invention finds specific, but not limiting, technical application in the sector of the automatic packaging machines of the horizontal type HFFS (i.e. "Horizontal Form Fill Seal"), intended to form packages of the "stand-up pouch" or "doypack" type, i.e. having a square or rectangular bottom and configured to assume, during use, an erected arrangement substantially vertical with respect to a surface on which they rest. These packages are suitable for containing food products (e.g. beverages, dairy products, washing liquids, detergents, soaps, creams, sanitisers); pet products (e.g. pet food, gadgets); as well as non-food products (e.g. screws, nuts, adhesives, medicines).

### PRIOR ART

It is known, in the aforesaid technical sector of reference, the use of packaging machines such as those briefly mentioned above.

In particular, a packaging machine of the known type typically comprises a frame and at least one sealing device having a support structure slidably connectable and movable along a linear track mounted integral with the frame of the packaging machine.

This track extends parallel to a horizontal working axis (i.e. parallel to the ground), corresponding to a sliding direction of a flexible packaging film. The sealing device further comprises a pair of sealing bars mounted integral with the support structure and each extending substantially vertically, i.e. orthogonally to the linear track. More in detail, the sealing bars are disposed spaced apart from each other to accommodate, between them, a passage of the flexible film, and are reciprocally movable to abut and be cyclically spaced apart over time, so as to produce one or more sealed portions on the flexible film itself, and thus form an at least partially closed package.

A sealing device of the known type, as just described, is typically mounted on a packaging machine, which comprises a plurality of the aforesaid sealing devices.

More in detail, each sealing device is slidably mounted and movable along the aforesaid track, and is reciprocally spaced apart with respect to adjacent sealing devices, by a predefined adjustable value of distance. This value of distance is variable and substantially corresponds to a position in which to form a plurality of sealed portions on the flexible film, and corresponding to a dimension of width of a package to be formed.

A packaging machine with a plurality of sealing devices comprises a shuttle (or carriage/trolley) movable by means of a linear actuator. The shuttle is mechanically connected to each sealing device and is configured to move (by means of the aforesaid linear actuator) simultaneously and in a mechanically rigid manner with respect to each other (i.e., mechanically in phase) the sealing devices along the working axis, i.e., along the aforesaid sliding direction of the flexible film and coinciding with the packaging direction.

In addition, the shuttle comprises a mechanism for coupling with a slider, for example of the pin type, configured to intercept and be inserted into a respective seat obtained on the support structure of each sealing device, to carry out a movement of the latter.

The packaging machine of the known type, equipped with the sealing device so far briefly described has proved to be not without drawbacks in practice. In particular, the main drawback lies in the fact that the packaging machine of the known type is operationally inflexible and/or not very versatile; in fact, the sealing devices mounted therein are not able to perform their own movement (in particular an adjustment of their position), simultaneously with a sliding movement of the flexible packaging film through the pair of sealing bars of the sealing device itself.

In other words, each known sealing device does not allow an adjustment and/or adaptation continuously and independently from the other adjacent sealing devices, of its position during the movement of the flexible film. Therefore, the sealing device requires the presence of auxiliary parts and components for its movement, which simultaneously move, and in a mechanically rigid way, all the sealing devices present on a packaging machine.

It follows that each sealing device imposes a forced stop of the packaging machine of the known type on which it is mounted, to allow its movement in a predefined position, and this produces stop times (sometimes frequent) and therefore high cycle times of the packaging machine itself. Therefore, in light of this, a known packaging machine having a plurality of sealing devices mounted as briefly described above, has a low, or at least unsatisfactory, overall efficiency (number of packages produced in the unit of time).

A further drawback lies in the fact that the packaging machine of known type is slow (i.e. it produces a limited number of packages per unit of time, or at least an unsatisfactory number) and/or unreactive (i.e. it has slow response times to reconfiguration inputs).

A further drawback lies in the fact that the packaging machine of the known type is bulky and/or not very compact. In fact, as mentioned above, each sealing device mounted on the packaging machine requires auxiliary parts (i.e. at least one shuttle, linear actuator, and coupling and/or uncoupling mechanism), levers, bars, operating rods (or similar) connected to it to allow its movement. These auxiliary parts make the sealing device as well as the packaging machine complex and expensive.

### OBJECTS OF THE INVENTION

The object of the present invention is to provide a packaging machine that allows to overcome the drawbacks of the aforementioned prior art.

A further object of the present invention is to provide a packaging machine that is operationally flexible and versatile.

A further object of the present invention is to provide a packaging machine that is fast in its movement, or at least that presents a more reactive and fast movement dynamics compared to the prior art.

A further object of the present invention is to provide a packaging machine that is compact and/or not bulky.

A further object of the present invention is to provide a packaging machine comprising a plurality of sealing devices, each of which can be realised and applied on the packaging machine itself in a simple, fast and low-cost manner.

A further object of the present invention is to provide a packaging machine that is accurate and reliable during its operation.

A further object of the present invention is to provide a packaging machine having an improved and/or alternative configuration, both in structural and functional terms, with respect to the packaging machine of the prior art.

### SUMMARY

All the objects, both individually and in any combination thereof, and others that will result from the detailed description that follows are achieved, according to the invention, with a packaging machine having the characteristics indicated in independent claim 1.

The dependent claims outline particularly advantageous embodiments of the invention.

### BRIEF DESCRIPTION OF THE DRAWINGS

Further features and advantages of the present invention will become more apparent from the approximate and thus non-limiting description of a preferred, but non-exclusive, embodiment of a packaging machine, as illustrated in the accompanying drawings, wherein:
- figure 1 shows, according to a perspective view, a packaging machine according to an embodiment of the invention;
- figure 2 shows, according to a partial perspective view, an enlarged detail of the packaging machine illustrated in figure 1;
- figure 3 shows, according to a partial exploded view, an enlarged detail of the packaging machine illustrated in figure 2.

With reference to the drawings, they serve solely to illustrate embodiments of the invention with the aim of better clarifying, in combination with the description, the inventive principles at the basis of the invention.

### DETAILED DESCRIPTION OF THE INVENTION

With reference to the attached figures, a packaging machine according to the present invention has been indicated overall with the number 101.

The packaging machine 101 is equipped with at least one sealing device, which has been indicated with number 100.

The sealing device 100 is particularly intended to be operationally and mechanically installed on an automatic packaging machine, more specifically but not in a limiting manner, the machine is of the horizontal type (referred to with the term HFFS, i.e. "Horizontal Form Fill and Seal" in the technical jargon of the sector) and in particular intended to form packages of the "stand-up pouch" or "doypack" type, i.e. packages with a square or rectangular bottom, specially shaped to assume, during use, a substantially vertical configuration (i.e. erected) when resting on a support surface.

In the following description, specific reference will be made to a HFFS packaging machine as just described, in a non-limiting manner, equipped with at least one of the aforesaid sealing devices 100.

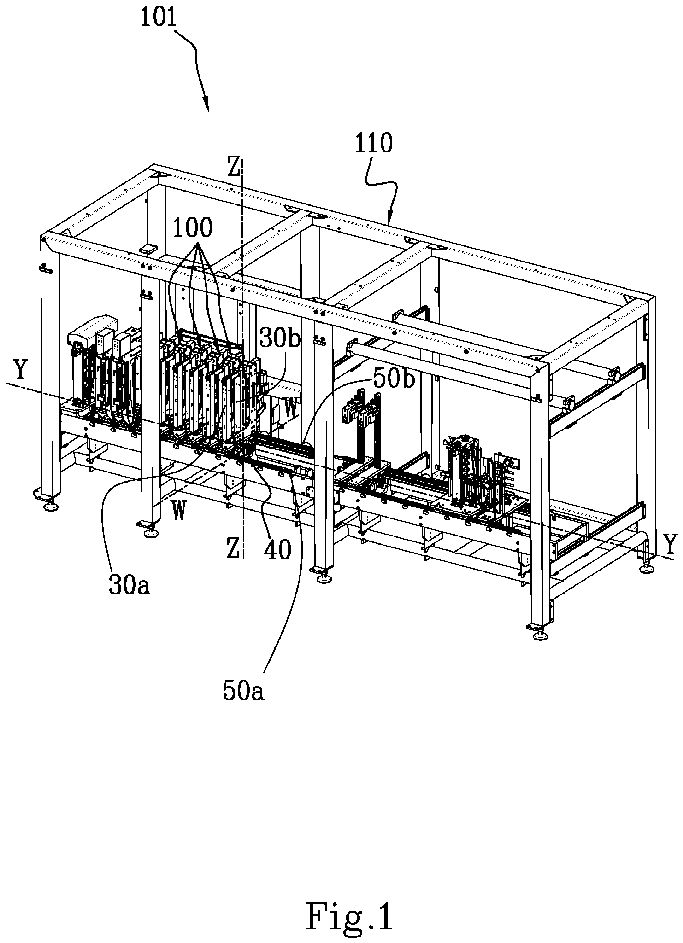

In accordance with the embodiment of the invention illustrated in the attached figures 1-4, the sealing device 100 is configured to be mechanically mounted on the packaging machine 101.

As illustrated in figure 1, the packaging machine 101 extends mainly along a first axis Y-Y, which substantially corresponds to a sliding direction of a flexible packaging film, i.e. a direction along which a plurality of packages are produced and moved.

The packaging machine 101 comprises a plurality of functional groups connected and cooperating with each other, disposed substantially in succession along the first axis Y-Y.

Specifically, the packaging machine 101 comprises a flexible film feeding group, comprising at least one reel and diverting means configured to direct the flexible film so as to orient and convey it in accordance with a packaging direction substantially parallel to the first axis Y-Y.

The packaging machine 101 further comprises a forming group configured to receive the flexible film from the feeding group, and shape it so as to form a package, at least partially closed, suitable for receiving a plurality of products.

Specifically, the forming group comprises at least one sealing device 100 according to the invention (described in more detail below) configured to apply on each package being formed a plurality of sealed portions, so as to create a wrapper, at least partially closed, around one or more products to be packaged.

According to one aspect of the invention, the flexible packaging film comprises a film of polymeric material, for example of the monolayer or multilayer type. In the latter case, the flexible film comprises at least one polymeric layer (e.g. polypropylene PP) and at least one layer in a different material, preferably paper. This type of flexible packaging film is commonly called "paper-based film" in the technical jargon of the sector.

The packaging machine 101 further comprises a filling group, configured to introduce a predefined quantity of one or more products into each package; and finally a closing group configured to seal each filled package.

In accordance with the embodiment of the invention illustrated in the attached figures, the sealing device 100 comprises a support structure 20, which is movable along the first axis Y-Y disposed substantially parallel to the ground and extending parallel to a feed direction of a flexible packaging film.

More in detail, the support structure 20 is slidably connected to at least one slide guide, and specifically to a first and a second slide guide 50a, 50b, each extending parallel to the first axis Y-Y, and integrally mounted on the packaging machine.

According to one aspect of the invention, the support structure 20 comprises a plurality of sliding blocks 51 slidably coupled to each slide guide 50a, 50b so as to define the aforesaid sliding connection, and in particular a prismatic type coupling.

The sealing device 100 further comprises a pair of sealing bars 30a, 30b facing each other and mounted on the support structure 20, each extending along a second axis Z-Z, transverse, preferably orthogonal, to the first axis Y-Y.

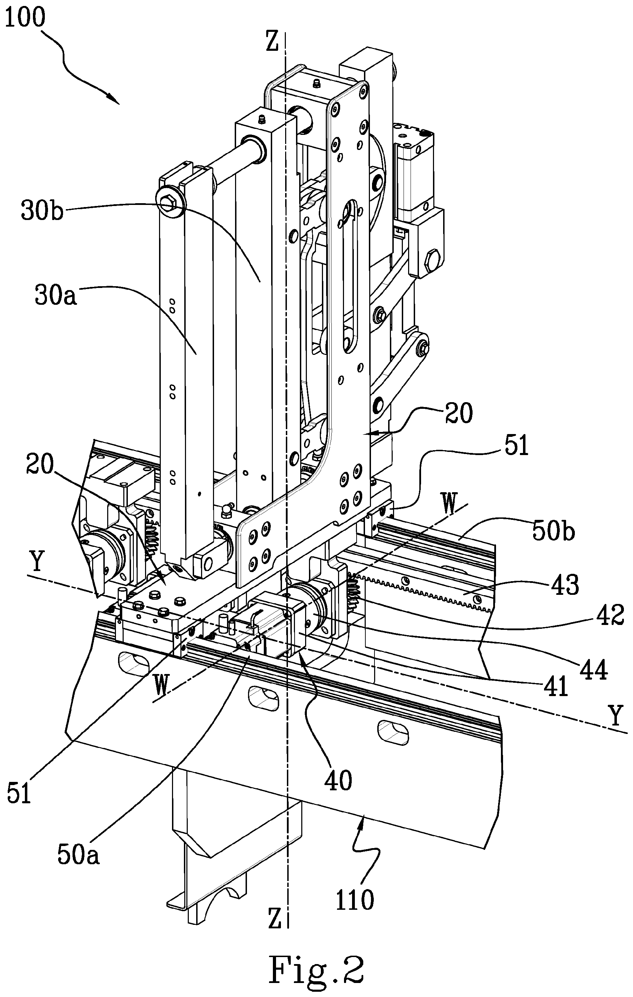

According to one aspect of the invention, the second axis Z-Z is substantially vertical. In fact, as illustrated in figure 2, the pair of sealing bars 30a, 30b extends vertically with respect to the first axis Y-Y, and with respect to the ground.

More in detail, each sealing bar 30a, 30b is reciprocally movable between a rest configuration in which the sealing bars 30a, 30b are spaced apart from each other to allow a sliding through of the flexible film; and a working configuration in which the sealing bars 30a, 30b are abutted so as to produce one or more sealed portions on the flexible film, in order to form an at least partially closed package.

The pair of sealing bars 30a, 30b is configured to produce at least one transverse seal and at least one pair of longitudinal seals spaced apart from each other, so as to define substantially "U"-shaped sealed portions on each package.

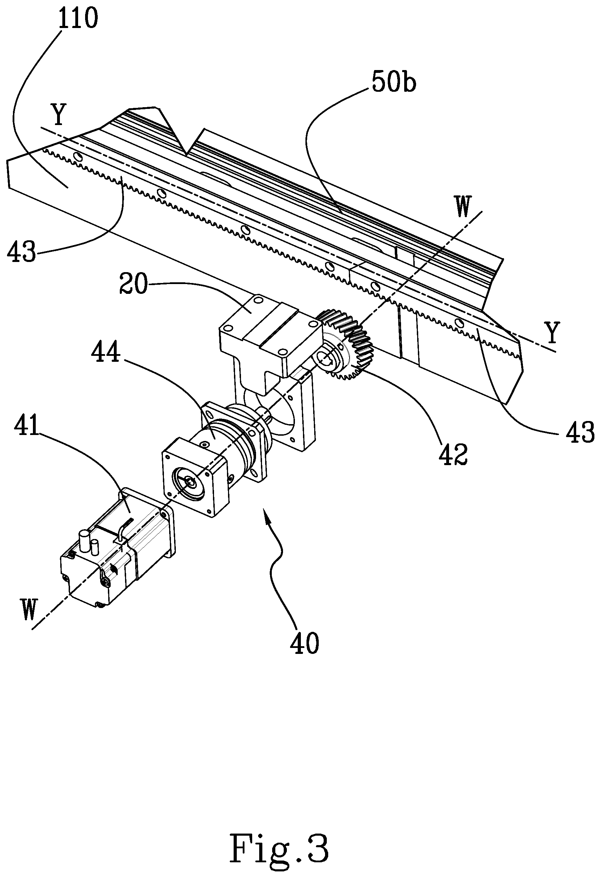

In accordance with the embodiment of the invention, in particular illustrated in figures 3-4, the sealing device 100 comprises actuation means 40 mechanically mounted on the support structure 20 and selectively activatable to move the sealing device 100 by a predefined value of shift parallel to the first axis Y-Y.

More specifically, the actuation means 40 allow an autonomous and/or independent movement of the sealing device 100 itself on which they are mounted, so as to adjust a position of the sealing device 100 during a simultaneous sliding through of the flexible packaging film along the first axis Y-Y.

Advantageously, the sealing device 100 is movable independently and simultaneously with respect to a sliding through of the packaging film. It follows, that the packaging machine on which the sealing device 100 is mounted, allows a movement of the device itself without necessarily stopping the movement of the flexible film, and therefore without having any stop or interruption in its cyclic operation.

This produces an increase in the overall efficiency of the machine, understood as the number of packages produced in the unit of time.

As mentioned above, the support structure 20 is slidably connectable to a first and a second slide guide 50a, 50b each extending parallel to the first axis Y-Y so as to define a track (see figure 1-2).

Preferably, the first and second slide guides 50a, 50b are substantially equal to each other and are therefore interchangeable. In other words, it is possible to invert the mounting of the first slide guide 50a with the second slide guide 50b without compromising the operation of the sealing device 100.

Preferably, the first and second slide guides 50a, 50b can be made by means of a plurality of respective portions, disposed in succession between them and each mounted integral with the frame 110. In this way, the mounting of the first and second slide guides 50a, 50b is quick and easy.

According to one aspect of the invention, illustrated in figure 2, the actuation means 40 is disposed mounted in a lowered position of the support structure 20 so as to be enclosed, during use, in a volume defined between the first and second slide guides 50a,50b and a bottom portion of the support structure 20 itself.

In other words, the support structure 20 is connected to each slide guide 50a,50b so as to define a sliding carriage along the track defined by the aforesaid slide guides 50a,50b (i.e., a connecting bridge between the two). The actuation means 40 is mounted on the support structure 20 in a lowered position with respect to the sealing bars 30a, 30b, so as not to protrude along the second axis Z-Z, i.e. vertically, beyond an encumbrance defined by the first and second slide guides 50a, 50b.

In other words, the actuation means 40 is mounted integrally with the support structure 20 in a position opposite to the second axis Z-Z, along which the sealing bars 30a, 30b extend.

According to one aspect of the invention, the actuation means 40 is mounted and extend along a third axis W-W which is transverse, preferably orthogonal, to the first axis Y-Y and the second axis Z-Z. As illustrated in figure 2, the third axis W-W is orthogonal to each slide guide 50a, 50b.

According to one aspect of the invention, the actuation means 40 comprises a geared movement mechanism.

More in detail, this movement mechanism is configured to allow a relative sliding between the sealing device 100 along the first and second slide guides 50a, 50b, parallel to the first axis Y-Y.

According to one aspect of the invention, in particular illustrated in figure 3-4, the geared movement device is of the rack-and-pinion type.

Specifically, as described in more detail below, the rack-and-pinion mechanism comprises a fixed portion mounted integral with the first or second slide guide 50a, 50b; and a movable portion mounted integral with the support structure 20 of the sealing device 100.

As illustrated in figure 3-4, the actuation means 40 comprises an electric motor 41 mounted on the support structure 20.

The electric motor 41 is of the type selectable between brushless motor, stepper motor, or asynchronous motor.

The actuation means 40 further comprises a pinion 42 connected to the electric motor 41 and configured to be driven in rotation about the third axis W-W; and a fixed rack 43, mounted parallel to the first or second slide guide 50a,50b.

In particular, the rack 43 is mounted integral with the frame 110 of the packaging machine 101, and extends parallel to the first axis Y-Y.

More in detail, as illustrated in figure 2, the rack is preferably made in a plurality of portions disposed in succession to each other so as to substantially make a single and continuous body.

According to one aspect of the invention illustrated in the attached figures, the actuation means 40 preferably comprises a single rack 43, preferably mounted proximal to one of said first or second slide guide 50a, 50b, and preferably disposed in a lowered position with respect to the first and second slide guides 50a, 50b

According to one aspect of the invention, the pinion 42 is mechanically coupled to the rack 43 so as to define the geared movement mechanism (mentioned above).

Preferably, the pinion 42 and the rack 43 may comprise a toothing of the straight or helical teeth type.

According to one aspect of the invention, the actuation means 40 comprises at least one position sensor (not illustrated in the attached figures) configured to detect a position of the sealing device 100 itself along the first axis Y-Y.

Specifically, said position sensor comprises at least one encoder, in particular of the rotary type, preferably mounted inside the electric motor 41 (i.e. integrated) and configured to detect at least one parameter of a speed and/or an angular position of the shaft of the electric motor 41, and provide in output a closed-circuit feedback signal that is used by a control system (e.g. an electronic control unit) for monitoring the operating parameters (i.e. rotation speed, position) of the actuation means 40.

Preferably, the encoder is configured to preferably perform a closed loop feedback control.

According to one aspect of the invention, the actuation means 40 comprises at least one speed reducer 44 interposed between the electric motor 41 and the pinion 42 and connected to them.

In particular, the speed reducer 44 is configured to vary a torque and an angular velocity of rotation about the third axis W-W, between the electric motor 41 and the pinion 42.

Advantageously, the speed reducer 44 allows to modulate parameters of angular velocity (rad/s) and torque (Nm) generated by the electric motor 41 at its shaft, to adapt them to parameters required at the pinion 42, and suitable for the particular type of application.

According to one aspect of the invention, the speed reducer 44 comprises a planetary gear reducer, preferably of the single-stage type.

As illustrated in the attached figures, the packaging machine 101 comprises a frame 110 configured to be rested on the ground, and preferably made of a metallic material, for example steel, to give strength and rigidity to the packaging machine 101 during its operation.

The frame 110 has a substantially box-like, or cage-like, shape and extends mainly along the first axis Y-Y (see figure 1).

The packaging machine 101 further comprises first and second slide guides 50a, 50b (introduced above) each extending along the first axis Y-Y substantially parallel to the ground and defining a feed direction of a flexible packaging film.

The first and second slide guides 50a, 50b are mechanically mounted integrally on the frame 110.

The packaging machine 101 further comprises a sealing device 100 having the characteristics described above.

More specifically, the sealing device 100 is slidably mounted on the first and second slide guides 50a, 50b and movable parallel to the first axis Y-Y by a predefined value of shift so as to enable an adjustment of the position of the sealing device 100 itself during a sliding through of the flexible packaging film.

Advantageously, the packaging machine 101 is flexible and versatile, and has a higher overall production efficiency than the machine of the known type. In fact, the sealing device 100 is movable independently of the sliding through of the flexible film, and in particular without requiring a stop/interruption of the operation of the packaging machine.

In accordance with the embodiment illustrated in the attached figures, the packaging machine 101 comprises a plurality of sealing devices 100 (see figure 1) slidably mounted on the first and second slide guides 50a, 50b.

In particular, each sealing device 100 is positioned along the first axis Y-Y at predefined intervals of distance from each other and corresponding to a dimension of width of a package to be formed.

Operationally, each sealing device 100 is selectively activatable to move independently from the others to adjust a position thereof during a sliding through of the flexible packaging film.

According to one aspect of the invention, in particular illustrated in figure 2, the sealing device 100 comprises locking means.

These locking means is mounted integrally on board the device 100 itself, and may comprise locking members preferably of the pneumatic type, such as for example one or more pneumatic cylinders, or locking members of the mechanical type, such as for example an articulated quadrilateral lever mechanism.

The latter can be driven by means of an electric motor.

The locking means just briefly mentioned is known to a person skilled in the art and therefore not further described.

## Claims

1. A packaging machine (101) comprising:
- a frame (110) configured to be rested on the ground and comprising first and second slide guides (50a, 50b), each extending along a first axis (Y-Y) substantially parallel to the ground and defining a feed direction of a flexible packaging film;
- a plurality of sealing devices (100) slidably mounted on the first and second slide guides (50a, 50b) and movable parallel to said first axis (Y-Y);
- wherein each sealing device (100) comprises: a support structure (20) movable along said first axis (Y-Y);
- a pair of sealing bars (30a, 30b) facing each other and mounted on said support structure (20), each extending along a second axis (Z-Z), transverse to said first axis (Y-Y);
each sealing bar (30a, 30b) being reciprocally movable between a rest configuration, in which said sealing bar (30a, 30b) are spaced apart from each other to allow a sliding through of the flexible film; and a working configuration, in which said sealing bars (30a, 30b) are abutted so as to produce one or more sealed portions on the flexible film, in order to form an at least partially closed package;
**characterised in that** each sealing device (100) of the plurality of sealing devices (100) comprises actuation elements (40) mechanically mounted on said support structure (20) and selectively activatable to move each sealing device (100) by a predefined value of shift parallel to said first axis (Y-Y),
and **in that** said actuation elements (40) are configured to allow an autonomous and/or independent movement of each sealing device (100) on which said actuation elements (40) are mounted, so as to adjust a position of each sealing device (100) during a simultaneous sliding through of the flexible packaging film.

2. The packaging machine (101) according to claim 1, wherein said support structure (20) is slidably connectable to said first and second slide guides (50a, 50b), which define a track;
and wherein said actuation elements (40) are disposed mounted in a lowered position of said support structure (20) so as to be enclosed, during use, in a volume defined between the first and second slide guides (50a,50b) and a bottom portion of the support structure (20) itself.

3. The packaging machine (101) according to claim 1 or 2, wherein said actuation elements (40) are mounted and extend along a third axis (W-W) which is transverse, preferably orthogonal, to said first axis (Y-Y) and said second axis (Z-Z).

4. The packaging machine (101) according to any one of the preceding claims, wherein said actuation elements (40) comprise a geared movement mechanism.

5. The packaging machine (101) according to claim 4, wherein said geared movement mechanism is of the rack-and-pinion type.

6. The packaging machine (101) according to claim 5, wherein said actuation elements (40) comprise:
- an electric motor (41) mounted on said support structure (20);
- a pinion (42) connected to said electric motor (41) and configured to be driven in rotation about said third axis (W-W); and
- a fixed rack (43), mounted parallel to the first and second slide guide (50a,50b);
said pinion (42) being mechanically coupled to said rack (43) so as to define said geared movement mechanism.

7. The packaging machine (101) according to claim 6, wherein said electric motor (41) is of the type selectable from a brushless motor, a stepper motor, and an asynchronous motor.

8. The packaging machine (101) according to claim 6, wherein said actuation elements (40) comprise at least one position sensor configured to detect a position of said sealing device (100) itself along said first axis (Y-Y).

9. The packaging machine (101) according to any one of the preceding claims, wherein said actuation elements (40) comprise at least one speed reducer (44) interposed between said electric motor (41) and said pinion (42) and connected to them;
wherein said speed reducer (44) is configured to vary a torque and an angular velocity of rotation about said third axis (W-W), between said electric motor (41) and said pinion (42).

10. The packaging machine (101) according to claim 6, wherein said speed reducer (44) comprises a planetary gear reducer.
